# EUROPÄISCHE PATENTSCHRIFT

(11) **EP 1 188 947 B1**
(45) Veröffentlichungstag und Bekanntmachung des Hinweises auf die Patenterteilung: **11.01.2012**
(21) Anmeldenummer: 01810846.4
(22) Anmeldetag: 03.09.2001
(51) Int. Cl.: F16D 69/02, B66B 5/24

(54) **Sicherheitseinrichtung zu einem Aufzug**
Safety device for an elevator
Dispositif de sécurité pour ascenseur

(30) Priorität: 14.09.2000 DE 10045881
(43) Veröffentlichungstag der Anmeldung: 20.03.2002
(73) Patentinhaber: Inventio AG, 6052 Hergiswil (CH)
(72) Erfinder: Krenkel, Walter, 71272 Renningen (DE); Renz, Ralph, 71069 Sindelfingen (DE)

(56) Entgegenhaltungen:
- US-A- 5 964 320

## Beschreibung

Die vorliegende Erfindung betrifft eine Sicherheitseinrichtung zu einem Aufzug mit mindestens einer im Aufzugsschacht fest installierten Aufzugführungsschiene und mit einem Bremsteil, das mindestens einen Reibkörper mit mindestens einer Reibfläche aufweist, die an die Führungsschiene zur Abbremsung des Aufzugs anpressbar ist, wobei der Reibkörper als Reibwerkstoff einen faserverstärkten, keramischen Verbundwerkstoff aufweist, der Siliziumkarbid und als Verstärkungskomponente Kohlenstofffasern enthält, sowie ein Verfahren zur Herstellung eines solchen Reibkörpers.

Eine Sicherheitseinrichtung der vorstehend genannten Art, bzw. ein Bremsschuh für eine Aufzug-Nothalteinrichtung ist aus der US-A-5,964,320 bekannt.

Personenaufzüge in Wohnhäusern, Aussichtstürmen, usw., müssen über eine von der Betriebsbremse unabhängige Notbremse oder Notbremseinrichtung verfügen. Eine solche Notbremse ist als Fangvorrichtung ausgelegt, die, im Notfall, d.h. bei Überschreitung einer vorgegebenen Maximalgeschwindigkeit des Fahrkorbes, diesen durch Anpressen von Reibbelägen an Führungsschienen im Aufzugsschacht mit einer für die sich in dem Aufzug bzw. Fahrkorb befindlichen Personen verträglichen Verzögerung abbremst und in der abgebremsten, stillstehenden Position sicher hält.

Moderne Gebäude nehmen immer höhere Bauhöhen an, um den zur Verfügung stehenden Grund und Boden, insbesondere in Städten, ausnutzen zu können. Um die einzelnen Stockwerke in derartig hohen Gebäuden in annehmbaren Zeiten zu erreichen, werden die maximal zulässigen Geschwindigkeiten, die bis zu 1500 Meter pro Minute betragen können, ausgenutzt. Hieraus folgt, daß die im Notfall beim Abbremsen des Fahrkorbes aufzunehmende kinetische Energie entsprechend den zunehmenden Geschwindigkeiten auch zunimmt, so daß die als Linearbremse ausgelegten Notbremsen in ihren Reibbelägen im Notfall extremen Belastungen ausgesetzt werden. Herkömmliche, metallische Reibbeläge für Notbremseinrichtungen in Aufzügen sind für solche extremen Belastungen, bei denen sie sich bis zu 1000°C aufheizen können, nicht geeignet. Solche konventionellen Reibbeläge, wie sie beispielsweise in der GB-A-2 274827 beschrieben sind, besitZen eine Struktur der Gleitfläche, die eine Graphit-Phase, ejne Steadit-Phase, eine Zementit-Phase und eine Perlit-Phase enthält. Um den steigenden Anforderungen gerecht zu werden, wurden in neuerer Zeit keramische Bremsbeläge für Aufzugnotbremsen vorgeschlagen, deren Hauptbestandteil Siliziumnitrid ist. In der US-A-5,503,257 wird eine Aufzugsicherheitsvorrichtung angegeben, die keramische Bremsteile umfaßt; für das Keramikmaterial ist Aluminiumoxid, Siliziumnitrid oder Zirkonoxid angegeben.

Auch solche Keramikbremsbeläge bzw. die entsprechenden Bremsschuhe, die damit bestückt sind, stoßen an ihre Grenzen, eine sichere Funktion zu gewährleisten, da beim plötZlichen Aufschlagen der Bremsschuhe auf die metallischen Führungsschienen wegen der inhärenten Sprödigkeit und Schlagempfindlichkeit dieser Keramiken ein Bruch der Beläge infolge von mechanischer Überbelastung oder infolge von Thermoschock auftreten kann.
Die beschriebenen keramischen Bremsteile aus Aluminiumoxid, Siliziumnitrid oder Zirkonoxid sind, bezogen auf die Trägerplatte, von kleinerer Abmessung und formschlüssig bzw. verklebt in die Aufnahmen der Trägerplatte eingelassen. Aufgrund der unterschiedlichen Ausdehnungsverhalten zwischen den keramischen Bremsteilen und der metallischen Trägerplatte muß bei den hohen Reibflächentemperaturen mit einer Verspannung bzw. einem Lockern der Bremsteile gerechnet werden. Dies führt u.U. zum Ausfall der gesamten Bremseinrichtung durch abgescherte bzw. gebrochene Bremsteile.
Der Einsatz von Bremsteilen mit größerer flächenmäßiger Erstreckung (z.B. plattenförmige Bremsteile) ist aufgrund der unzureichenden Schadenstoleranz bei der auftretenden Biegebeanspruchung nicht möglich.

In der US-A-5,964,320 wird ein Bremskörper für Aufzugnotbremseinrichtungen vorgeschlagen, der eine Bremsfläche und eine Vielzahl von Bremsteilen, die in die Bremsfläche eingebettet sind und darüber vorstehen, aufweist. Diese vorstehenden Bremsteile sind aus einem Kompositmaterial aufgebaut, das ein keramisches Basismaterial enthält, das aus der Gruppe Siliziumnitrid oder Titanborid, Sialon und Siliziumkarbid besteht und nicht weniger als 10 Gewichts-% mindestens eines keramischen Materials umfaßt, das aus der Gruppe ausgewählt ist, die aus Siliziumkarbid-Whisker und Siliziumkarbid-Platelets besteht. Da diese Bremsschuhe bzw. deren Reibbeläge Mindestanteile an SiC-Whiskern (nadelförmige Fasern bis zu wenigen µm Länge) bzw. SiC-Platelets (plättchenförmige Teilchen im Mikrometermaßstab) umfassen, wird eine gewisse Verstärkung der Keramiken und eine geringe Steigerung der Bruchzähigkeit erreicht. Zusätzlich können diese Bremsteile 10 bis 55 Vol.-% Langfasern aus SiC, Si₃N₄, C oder Wolfram enthalten, die aber dann senkrecht zur Belagoberfläche angeordnet sind. Deren Verstärkungseffekte sind allerdings sehr gering. Durch Verschleiß und Bremsabrieb können außerdem die durch ihre geringe Größe lungengängigen Whisker- bzw. Platelet-Partikel durch Inhalierung vom Menschen aufgenommen werden. Deshalb werden heute Whisker bzw. Platelets wegen ihrer Toxizität nicht mehr eingesetzt, und ihre Verwendung ist in den meisten Ländern vom Gesetzgeber verboten.
Ausgehend von dem vorstehend beschriebenen Stand der Technik liegt der vorliegenden Erfindung die Aufgabe zugrunde, eine Sicherheitseinrichtung für einen Aufzug der eingangs beschriebenen Art derart weiterzubilden, daß sie den Anforderungen an Noteinrichtungen bei Aufzügen, die maximal zulässige Geschwindigkeiten von bis zu 1500 Meter pro Minute (entspricht 25 m/s) erreichen, wo beim Abbremsen der Fahrkörbe im Notfall Temperaturen an der Notbremseinrichtung von über 1000°C erreicht werden, gerecht werden.
Gelöst wird die Aufgabe bei einer Sicherheitseinrichtung der eingangs angegebenen Art durch einer Verbundwerkstoff gemäß Anspruch 1. Der Verbundwerkstoff umfaßt eine Matrix aus Siliziumkarbid und Kohlenstoff, wobei die Verstärkungskomponente aus Kohlenstofffasern gebildet ist, die eine Mindestlänge von 10 mm aufweisen, und wobei der Volumengehalt an Kohlenstofffasern im Reibkörper zwischen 30% und 70% beträgt. Eine solche Sicherheitseinrichtung zeichnet sich insbesondere durch die den Reibkörper verstärkenden Kohlenstofffasern mit einer Länge von 10 mm oder darüber aus; Verstärkungskomponenten in Form von Whiskern oder Platelets sind somit nicht erforderlich, so daß im Bremsfall bei einer Notbremsung keine gesundheitsschädigenden Stäube als Abrieb auftreten. Die die Verstärkungskomponente bildenden Kohlenstofffasern sind in einer Matrix aus Siliziumkarbid und Kohlenstoff eingebettet. Durch den Volumengehalt an Kohlenstofffasern im Reibkörper zwischen 30% und 70% ist gewährleistet, daß eine genügend hohe Bruchzähigkeit und Thermoschockbeständigkeit gegeben ist, wobei ein Volumengehalt an Kohlenstofffasern im unteren Bereich dann zu bevorzugen ist, wenn extrem niedrige Verschleißraten und eine hohe Wärmeleitfähigkeit erzielt werden sollen, während ein Volumengehalt an Kohlenstofffasern im oberen Bereich dann einzusetzen ist, wenn besonders hohe Anforderungen an die mechanische Stabilität des Verbundwerkstoffes gestellt sind.

Der Anteil an Kohlenstofffasern im Reibkörper wird bestimmt durch die erforderliche mechanische Festigkeit und Thermoschockbeständigkeit, die mit zunehmendem Fasergehalt ansteigen. Ein Mindestgehalt an Siliziumkarbid ist zur Erzeugung ausreichender Reibung und Verschleißbeständigkeit notwendig. Volumengehalte an Kohlenstofffasern im unteren Bereich sind dann zu bevorzugen, wenn die Fahrgeschwindigkeiten mäßig bzw. die Reibbeläge entsprechend dick dimensioniert werden können. Hohe Fasergehalte sind dann zu verwenden, wenn extreme Fahrgeschwindigkeiten erzielt werden sollen bzw., wenn aus Platzgründen die Reibbeläge sehr dünn ausgeführt werden müssen.

In einer bevorzugten Ausgestaltung werden die Kohlenstofffasern in den Reibkörpern in Form von schichtweise übereinandergestapelten Geweben und/oder Gewirken angeordnet; hierbei sind die Kohlenstofffasern zumindest im Bereich der Reibfläche derart orientiert, daß sie parallel dazu verlaufen. Durch diese Faserorientierung können beim schlagartigen Auftreffen der Beläge auf die Führungsschiene im Notfall und beim Halten im Stillstand des Fahrkorbes mit extrem hohen Flächenpressungen, die bis zu 100/MPa betragen können, die auftretenden hohen Biegemomente aufgenommen werden. Gerade durch diese Maßnahme lassen sich auch großflächige Beläge einstückig herstellen, d.h., es kann auf eine Vielzahl einzelner, kleiner Reibkörper verzichtet werden.
Aufgrund der hohen Bruchzähigkeit lassen sich diese Reibkörper, neben rechteckigen Belägen, auch zu kreisförmigen Ronden verarbeiten, und Befestigungsbohrungen, Quer- oder Längsnuten können ohne Nachteile auf die Haltbarkeit dieser Reibkörper eingebracht werden. Dadurch sind alle konventionellen Konstruktionen für den Einbau von solchen Reibkörpern in Fangvorrichtungen verwendbar.

Weiterhin haben Untersuchungen gezeigt, daß hohe Keramikgehalte in den Reibkörpern, d.h. ein Anteil an Siliziumkarbid von 20 Massen-% oder mehr, insbesondere im reibflächennahen Bereich des Reibkörpers, positive Auswirkungen auf die Reibwerthöhe und die Verschleißbeständigkeit haben. Solche hohen Keramikgehalte erhöhen vorteilhaft den Reibwert, die Wärmeleitfähigkeit und die Verschleißbeständigkeit. Der Anteil an Kohlenstofffasern im reibflächennahen Bereich des Reibkörpers sollte daher nicht höher ausgelegt sein, als daß die Reibungswärme durch eine entsprechend hohe Wärmeleitfähigkeit des Verbundwerkstoffes von mindestens 10 W/mK schnell abgeführt werden kann. Es hat sich gezeigt, daß sich dann, wenn die Wärmeleitfähigkeit im reibflächennahen Bereich des Reibkörpers zu gering eingestellt wird, metallische Abriebpartikel auf der Belagsfläche ablagern und zu einem lokalen Verschweißen mit der Führungsschiene im Notfall führen. Dies kann zum Ausbrechen bzw. Ablösen von Teilen des reibflächennahen Bereichs des Reibkörpers führen. Für den Aufbau der Reibkörper haben sich unbeschichtete Kohlenstofffasern mit einer Mindestlänge von 10 mm als vorteilhaft erwiesen. Kürzere Fasern konvertieren unter Wärmebehandlung und unter Bereitstellung von flüssigem Silizium in einem sehr hohen Anteil zu Siliziumkarbid, wodurch die Verschleißbeständigkeit zwar heraufgesetzt wird; allerdings wird die Materialfestigkeit durch diese Konvertierung zu SiC nachteilig beeinflußt. Um diese nachteiligen Einflüsse zu begrenzen bzw. zu kompensieren und zum Erreichen einer Mindestfestigkeit von 50 Mpa, sind Faserlängen der eingesetzten Kohlenstofffasern von mindestens 10 mm und ein Faservolumengehalt von mindestens 30% erforderlich, da ausreichende Festigkeiten insbesondere über die Faserlänge der Kohlenstofffasern und über den Faservolumengehalt eingesteIft werden. Als am vorteilhaftesten haben sich jedoch diejenigen Faserlängen erwiesen, die den längsten Abmessungen des Reibkörpers (beispielswelse Länge x Breite) entsprechen.

In einer Ausführungsform kann der Reibkörper der Sicherheitseinrichtung in einen Kernteil und mindestens einen die Reibfläche umfassenden Reibteil unterteilt werden. In einem solchen Aufbau können Kernteil und Reibteil den unterschiedlichen Anforderungen angepaßt werden, d.h. der Kernteil kann für eine hohe Festigkeit und Zähigkeit des Reibkörpers ausgelegt werden, während der Reibteil den spezifischen Anforderungen beim Eingreifen in die Führungsschiene im Notfall ausgelegt wird, d.h. der Reibteil wird auf sein tribologisches Verhalten (Reibwertkonstanz, Verschleiß- und Wärmeleitfähigkeit) hin optimiert.

Die einzelnen Schichten, aus denen ein solcher Reibkörper aufgebaut werden kann, können durch Reaktionssilizieren miteinander verbunden werden. Hierbei wird vor der Keramisierung in dem Verbindungsbereich zwischen den Schichten eine C-reiche Fügepaste eingebracht, die bei der nachfolgenden Silizierung mit dem flüssigen Silizium zu Siliziumkarbid reagiert.

Ein bevorzugter Schichtaufbau umfaßt drei Schichten, wodurch einerseits hohe Keramikgehalte im reibflächennahen Bereich des Reibkörpers realisiert werden können und andererseits trotzdem eine ausreichende mechanische Festigkeit des Reibkörpers durch eine festigkeitsoptimierte Schicht mit hohen Fasergehalten gewährleistet werden kann. Aufgrund der unterschiedlichen Gehalte an Kohlenstofffasern dehnen sich diese zwei Schichten bei Erwärmung unterschiedlich stark aus, so daß u.U. hohe Zugspannungen in dem reibflächennahen Bereich zum Ausfall führen können. Um dies zu vermeiden, wird zwischen den beiden Schichten eine zusätzliche dritte Schicht eingebracht, deren Ausdehnungsverhalten so auszulegen ist, daß kritische Zugspannungen vermieden bzw. auf ein erträgliches Maß reduziert werden können. Gerade mit drei Schichten kann ein in Reib- und Kernteil unterteilter Verbundwerkstoff mit wirtschaftlich vertretbarem Aufwand hergestellt werden.

Um die vorgenannten Vorteile zu erzielen, sollte der SiC-Gehalt der Matrix vom Kernbereich des Reibkörpers zur Reibfläche hin zunehmen, d.h. die stärker konvertierten Bereiche liegen außen, so daß dort der SiC-Gehalt höher ist. Um im Notbremsfall Abrieb schnell von den Reibflächenbereichen zu entfernen, können in dem Reibflächenbereich Vertiefungen, insbesondere in Form von Nuten, vorgesehen werden. Bevorzugt sollten die Vertiefungen quer zur Reibrichtung, oder, alternativ dazu, unter einem Winkel von 30° bis 60° zur Reibrichtung verlaufen; ein günstiger Winkel beträgt etwa 45°. Weiterhin sollten die Vertiefungen eine Breite von 1 bis 5 mm aufweisen, um ausreichend Abrieb aufnehmen zu können. Die Fläche der Vertiefungen in der Reibfläche sollte ≧ 30% der Fläche der gesamten Reibfläche betragen.

Eine Si und SiC enthaltende Schicht auf der Reibfläche, vorzugsweise in einer Dicke von 0,01 bis 0,2 mm, kann die Verschleißbeständigkeit gegenüber unbeschichteten ReibkÖrpern heraufsetzen. Es sollte allerdings darauf geachtet werden, daß die Haftung dieser keramischen Schicht auch bei hohen Temperaturen ausreichend hoch ist. Schichtdicken bis zu 0,2 mm sind zu bevorzugen, da dickere Schichten zum Abplatzen und damit Versagen der Reibschicht neigen.
Ein vorteilhafter Faservolumengehalt des Verbundwerkstoffs beträgt mindestens 50%; Werte von 50% oder darüber führen dazu, daß eine besonders hohe Festigkeit und Bruchzähigkeit erzielt werden kann.

Falls Reibkörper mit keramischen Schichten, beispielsweise wegen zu weichen Gegenpartnern (Führungsschiene), nicht in Frage kommen, sollte der Verbundwerkstoff eine offene Porosität von ≦ 10% haben. Eine offene Porosität oberhalb dieses Werts kann nachteilig dahingehend sein, daß durch Einlagerung von Abriebspartikeln, Öl und Fettbestandteilen der Führungsschiene, usw., der Reibwert abnimmt.

Um eine ausreichend hohe Verschleißfestigkeit zu erreichen, wird der SiC-Gehalt des Verbundwerkstoffs auf mindestens 20 Massen-% festgelegt, wobei sich dieser Wert auf den gesamten Reibkörper bezieht und eine Untergrenze für den Bereich der Reibfläche darstellt.

Kohlenstofffasern, die aus Bündeln von mindestens 1000 Einzelfilmenten gebildet sind, mit einem Durchmesser der Einzelfilamente in der Größenordnung von 5 bis 15 µm, bringen den Vorteil mit sich, daß eine makroskopisch gleichmäßige SiC-Verteilung im Verbundwerkstoff vorliegt. Außerdem ist damit eine kostengünstige Herstellung der Reibkörper möglich, da eine Vielzahl von handelsüblichen Faserhalbzeugen mit diesen Abmessungen erhältlich ist.
Um hohe Festigkeitsniveaus für die auftretenden, schlagartigen Belastungen zu erzielen, Sicherheitsreserven zu haben und großflächige Reibkörper herstellen zu können, sollte der Verbundwerkstoff eine Biegefestigkeit von mindestens 50 MPa aufweisen.
Als Verbundwerkstoff für die Reibkörper hat sich ein solcher als bevorzugt erwiesen, der durch Flüssigsilizieren eines Kohlenstoff-Kohlenstoff-Körpers gebildet ist, der durch Pyrolyse eines phenolharzgebundenen, kohlenstofffaserverstärkten Grünkörpers erzeugt ist. Mit einer solchen Verfahrensweise können Reibkörper hergestellt werden, die einerseits genÜgend hohe C-Faser-Anteile und andererseits ausreichend hohe SiC-Anteile aufweisen. Speziell mit diesem Verfahren lassen sich durch thermische Vorbehandlung der Fasern unterschiedliche C- bzw. SiC-Anteile zwischen reibflächennahen Bereichen und dem Kernbereich einstellen.

Der Verbundwerkstoff für die Reibkörper wird durch 40 bis 45 Massen-% SiC, 2 bis 6 Massen-% Si und 49 bis 58 Massen-% C und C-Fasern charakterisiert.

Falls die Reibkörper, über ihre Dicke gesehen, strukturiert werden, d.h. beispielsweise durch einen unterschiedlichen Schichtaufbau, so sollte der Reibkörper symmetrisch zur Mittelebene, auf die Dicke des Reibkörpers bezogen, aufgebaut werden.

Nachfolgend werden Ausführungsbeispiele von Reibkörpern zum Einsatz in Sicherheitseinrichtungen für einen Aufzug, mit einer im Aufzugsschacht fest installierten Aufzugs-Führungsschiene, in die die Reibkörper eingreifen, beschrieben.

### Ausführungsbeispiel 1

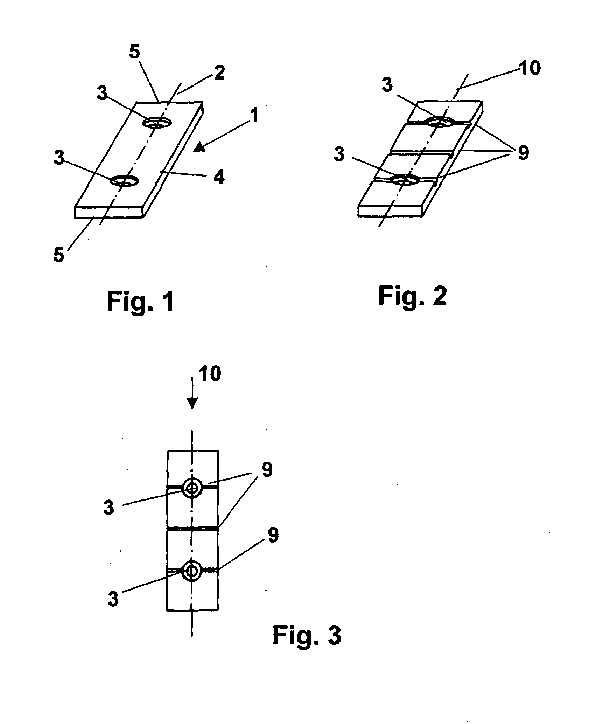

Es wurde ein Reibkörper aus einer aus 95 Gew.-% Siliziumkarbid und Kohlenstoff bestehenden Matrix und einer Faserverstärkung aus schichtweise übereinandergestapelten Kohlenstofffasergeweben mit einer Faserorientierung der Kohlenstofffasern in Richtungen von 0° und 90° aufgebaut. Die Kohlenstofffasern waren HTA-Fasern der Firma Akzo, Wuppertal, mit einer Filamentzahl von 3000.
Ein solcher Reibkörper ist in Figur 1 dargestellt und mit dem Bezugszeichen 1 bezeichnet. Dieser Reibkörper 1 besitzt eine Länge von 120 mm und eine Breite von 40 mm sowie eine Dicke von 8 mm. Auf der Mittellinie 2 liegend sind zwei Befestigungslöcher 3 mit ihrer Achse senkrecht zur Reibfläche 4 verlaufend vorgesehen. Diese Befestigungslöcher sind mit ihrer Achse von der Schmalseite 5 des Reibkörpers 1 jeweils 25 mm beabstandet. Das jeweilige Befestigungsloch 3 besitzt einen abgestuften Querschnitt, derart, daß in den weiten Durchmesserbereich der Kopf einer Befestigungsschraube oder -niete eingesetzt werden kann, derart, daß er nicht über die Reibfläche 4 vorsteht.

Ein Reibkörper 1, wie ihn die Figur 1 zeigt, wird in drei Schritten hergestellt.
Zunächst wird ein mit Phenolharz gebundener CFK-Grünkörper mit einem Faservolumengehalt von 50 -55% im Autoklaven hergestellt.
Danach erfolgt eine Pyrolyse des CFK-Grünkörpers bei Temperaturen bis zu 1650°C.
Im dritten Schritt erfolgt eine Imprägnierung des während der Pyrolyse entstandenen porösen Kohlenstoff/Kohlenstoff-Werkstoffes mit flüssigem Silizium bei einer Siliziertemperatur von mindestens 1420°C.

Der so hergestellte Reibkörper kann durch folgende Kennwerte charakterisiert werden:
- Dichte: 2,0 g/cm³
- Offene Porosität < 2%
- Phasenanteile in Masse-%: ca. 40% SiC, ca. 5% Si und ca. 55% C und C-Fasern
- Kurzbiegefestigkeit: 120 MPa.

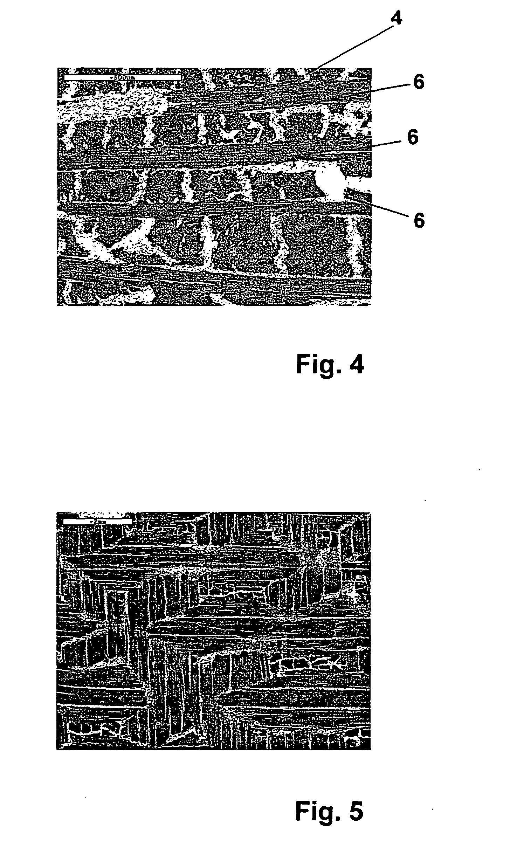

Die Mikrostruktur des Reibkörpers ist in den Figuren 4 und 5 gezeigt, wobei Figur 4 einen Querschnitt senkrecht zu der Reibfläche 4 des Reibkörpers der Figur 1 zeigt, während die Figur 5 eine Draufsicht auf die Reibfläche 4 des Reibkörpers 1 der Figur 1 zeigt. Die Figur 4 ist 100-fach vergrößert, während die Figur 5 eine 15-fache Vergrößerung zeigt.

In den beiden Figuren sind deutlich die Kohlenstofffasern 6 zu erkennen, die, wie anhand des Querschnitts der Figur 4 zu erkennen ist, parallel zur Reibfläche 4 ausgerichtet sind. Die weißen bzw. hellen Bereiche zeigen Siliziumkarbid, das die einzelnen Kohlenstofffasern ummantelt bzw. die Zwischenräume ausfüllt. Dadurch sind auf der Reibflächenoberseite gleichzeitig immer SiC- und C-Phasen in Eingriff, wobei die C-Anteile volumen- und massenmäßig überwiegen.

In Figur 5 ist die gewebte Struktur des Kohlenstofffasergerüsts zu erkennen mit Faserorientierungen unter 0° und 90° zueinander (die Oberfläche ist angeschliffen). Die Länge der eingesetzten Fasern war in diesem Ausführungsbeispiel exakt so lang wie die geometrischen Abmessungen des Reibkörpers, d.h. 120 mm in 0°-Richtung und 40 mm in 90°-Richtung .

### Ausführungsbeispiel 2

Es wurde ein Reibkörper aus einer überwiegend aus Siliziumkarbid und Kohlenstoff bestehenden Matrix und einer Faserverstärkung aus schichtweise übereinandergestapelten Kohlenstofffasergeweben mit Kohlenstofffasern (HTA-Fasern der Firma Akzo, Wuppertal, mit einer Filamentzahl von 3000) in Orientierungen von 0 und 90° hergestellt. Zur Erhöhung der Verschleißfestigkeit und zur Erhöhung der Reibwerte wurde der Keramikgehalt in den reibflächennahen Bereichen gegenüber dem Kernbereich deutlich gesteigert. Um einem Verzug entgegenzuwirken, wurde der Reibbelag symmetrisch zu einer Mittelebene, in Bezug auf die Dicke des Reibkörpers, aufgebaut.

Die Herstellung dieses Reibbelages erfolgt wiederum in drei Schritten, wie beim Ausführungsbeispiel 1 :

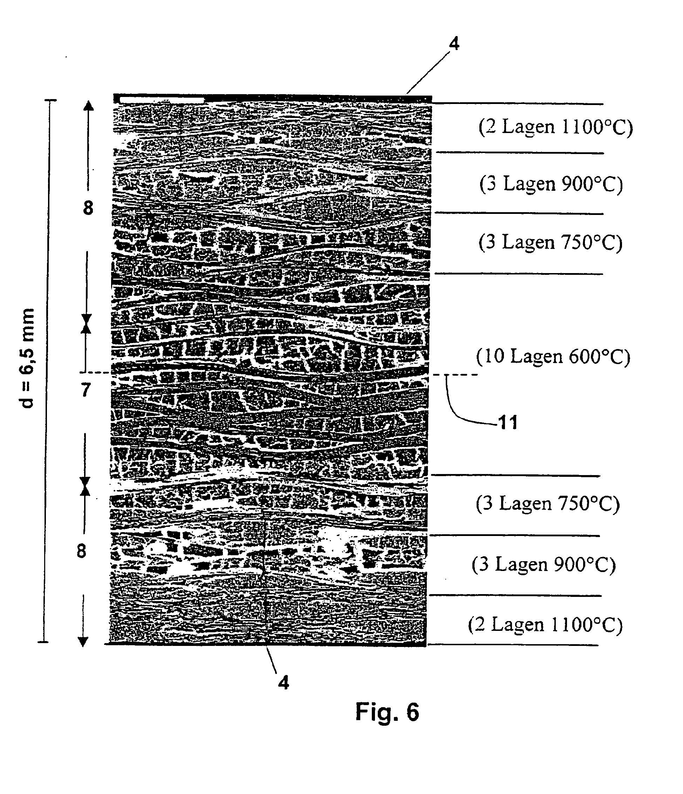

Zunächst Herstellung eines CFK-Grünkörpers im Harz-Injektions-Verfahren mit einem Faservolumengehalt von ca. 60%; die einzelnen Kohlenstoff-Gewebelagen wurden bei unterschiedlichen Vorbehandlungstemperaturen von 600°C, 750°C, 900°C und 1100°C vor der Harzinfiltration unter Inertbedingungen für ca. 20 Minuten ausgelagert. Die einzelnen Lagen waren 0,25 mm dick und symmetrisch zur Mittelebene aufgebaut. Insgesamt waren 26 Lagen vorhanden (siehe Figur 6).

Anschließend wurde der so aufgebaute CFK-Grünkörper bei Temperaturen bis 1650°C pyrolysiert.

Im dritten Verfahrensschritt erfolgte eine Imprägnierung des aufgrund der Pyrolyse entstandenen porösen Kohlenstoff/Kohlenstoff-Werkstoffes mit flüssigem Silizium bei einer Temperatur von 1650°C.

Der erhaltene C/C-SiC-Werkstoff kann durch folgende Kennwerte charakterisiert werden:
- Dichte: 2,0 g/cm³
- Offene Porosität < 2%
- Faseranteile in Masse-%: ca. 45% SiC, ca. 5% Si und ca. 50% C und C-Fasern
- Kurzbiegefestigkeit: 55 MPa.

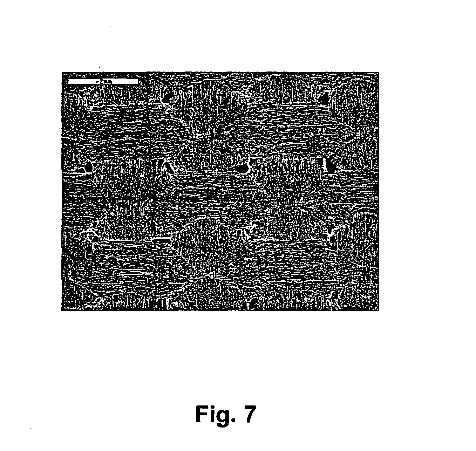

Die Mikrostruktur dieses Reibkörpers ist in den Figuren 6 und 7 zu sehen, wobei die Figur 6 eine 35-fache Vergrößerung zeigt, während die Figur 7 eine 15-fache Vergrößerung zeigt.

In Figur 6, die den Schichtaufbau in Dickenrichtung des Reibkörpers 1 zeigt, d.h. senkrecht zur Reibfläche 4, sind die Bereiche der unterschiedlich vorbehandelten Kohlenstoff-Gewebelagen zu erkennen. Hierbei sind die Kohlenstofffasern im Mittelbereich, mit dem Bezugszeichen 7 bezeichnet, solche, die bei 600°C thermisch ausgelagert wurden, während die Kohlenstofffasern in oberflächennahen Bereichen, mit dem Bezugszeichen 8 bezeichnet sind. Die Auslagerungstemperaturen wurden also von der Mittenebene, mit dem Bezugszeichen 11 bezeichnet, bzw. von dem Mittelbereich zum Randbereich hin von 600°C auf 1100°C gesteigert.

Wie ein Vergleich der Oberflächenstruktur des Reibkörpers des Ausführungsbeispiels 1 , gezeigt in Figur 5, mit der in Figur 7 gezeigten Oberflächenstruktur des Ausführungsbeispiels 2 ergibt, zeigen Reibkörper nach Figur 7 im reibnahen Außenbereich wesentlich höhere SiC-Gehalte (helle Breiche). Die dargestellte Oberfläche besitzt zudem den Vorteil einer feinverteilten SiC-Matrix, die die metallische Führungsschiene nicht schädigt, so daß eine Riefenbildung in der Schiene vermieden wird. Ein Reibkörper nach Ausführungsbeispiel 2 (Figur 6) ist beispielsweise für besonders hohe und konstante Reibwerte zu bevorzugen.

In Figur 2 ist der Reibbelag, wie er in Figur 1 dargestellt ist, mit zusätzlichen Nuten 9 versehen, die senkrecht zur Reibrichtung, durch den Pfeil 10 angegeben, verlaufen. Die Nuten 9 besitzen eine Breite von 2 mm sowie eine Tiefe von 2 mm. Insgesamt sind in dem in den Figuren 2 und 3 dargestellten Reibkörper 1 drei solcher Nuten 9 vorhanden. Die Nuten 9 verhindern ein Verschmieren der Reibfläche 4 des Reibkörpers 1 und gewährleisten einen definierten Reibungszustand, d.h., während der Notbremsung entstehende Verschleißpartikel können sich in die Nuten 9 einlagern und beeinflussen den Reibungskoeffizienten nicht negativ. Die Verschleißpartikel sind vornehmlich metallischer Art als Abrieb von den metallischen Führungsschienen, in die die Reibkörper 1 eingreifen.

## Patentansprüche

1. Sicherheitseinrichtung zu einem Aufzug mit mindestens einer im Aufzugsschacht fest installierten Aufzugsführungsschiene und mit einem Bremsteil, das mindestens einen Reibkörper mit mindestens einer Reibfläche aufweist, die an die Führungsschiene zur Abbremsung des Aufzugs anpressbar ist, wobei der Reibkörper als Reibwerkstoff einen faserverstärkten, keramischen Verbundwerkstoff aufweist, der Siliziumkarbid und als Verstärkungskomponente Kohlenstofffasern enthält,
**dadurch gekennzeichnet, dass**
- der Verbundwerkstoff eine Matrix aus Siliziumkarbid und Kohlenstoff umfasst,
- die Kohlenstofffasern (6; 7; 8) eine Mindestlänge von 10 mm aufweisen,
- ein Volumengehalt an Kohlenstofffasern (6; 7; 8) im Reibkörper zwischen 30% und 70% beträgt, und
- im Verbundwerkstoff dessen Phasenanteile in Massenprozent
a) SiC: 40 bis 45 %
b) Si: 2 bis 6 %
c) C und C-Fasern: 49 bis 58%
betragen.

2. Sicherheitseinrichtung nach Anspruch 1, **dadurch gekennzeichnet, dass** die Kohlenstofffasern in Form von schichtweise übereinandergestapelten Geweben und/oder Gewirken angeordnet sind, wobei die Kohlenstofffasern (6; 7; 8) wenigstens im Bereich der Reibfläche (4) derart orientiert sind, dass sie parallel dazu verlaufen.

3. Sicherheitseinrichtung nach Anspruch 1, **dadurch gekennzeichnet, dass** der SiC-Gehalt der Matrix im reibflächennahen Bereich des Reibkörpers (1) höher ist als in dessen reibflächenfernen Bereich.

4. Sicherheitseinrichtung nach Anspruch 1, **dadurch gekennzeichnet, dass** der Reibkörper (1) in einen Kernteil und mindestens einen die Reibfläche umfassenden Reibteil unterteilt ist.

5. Sicherheitseinrichtung nach Anspruch 1, **dadurch gekennzeichnet, dass** der Reibkörper (1) aus einzelnen Schichten aufgebaut ist und diese Schichten durch Reaktionssilizierung miteinander verbunden sind, wobei vorzugsweise drei Schichten vorgesehen sind.

6. Sicherheitseinrichtung nach Anspruch 3, **dadurch gekennzeichnet, dass** der SiC-Gehalt der Matrix vom Kernbereich des Reibkörpers (1) zur Reibfläche (4) hin zunimmt.

7. Sicherheitseinrichtung nach Anspruch 1, **dadurch gekennzeichnet, dass** der Reibkörper (1) in dem Reibflächenbereich Vertiefungen(9), insbesondere in Form von Nuten, aufweist.

8. Sicherheitseinrichtung nach Anspruch 7, **dadurch gekennzeichnet, dass** die Vertiefungen (9) quer zur Reibrichtung oder unter einem Winkel von 30° bis 60°, vorzugsweise unter einem Winkel von 45° zur Reibrichtung (10), verlaufen.

9. Sicherheitseinrichtung nach Anspruch 1, **dadurch gekennzeichnet, dass** auf der Reibfläche (4) eine Si und SiC enthaltende Schicht aufgebracht ist, wobei diese Schicht vorzugsweise eine Dicke von 0,01 bis 0,2 mm aufweist.

10. Sicherheitseinrichtung nach Anspruch 1, **dadurch gekennzeichnet, dass** der Verbundwerkstoff einen Faservolumengehalt von mindestens 50% und/oder eine offene Porosität von ≤ 10% aufweist.

11. Sicherheitseinrichtung nach Anspruch 1, **dadurch gekennzeichnet, dass** die Kohlenstofffasern aus Bündeln von mindestens 1000 Einzelfilamenten gebildet sind, wobei die Einzelfilamente einen Durchmesser zwischen 5 bis 15 µm aufweisen.

12. Verfahren zum Herstellen eines Reibkörpers (1) für eine Aufzugbremse, der an die Führungsschiene eines Aufzugs anpressbar ist, wobei der Reibkörper (1) als Reibwerkstoff einen faserverstärkten, keramischen Verbundwerkstoff aufweist, der Siliziumkarbid und als Verstärkungskomponente Kohlenstofffasern enthält,
**dadurch gekennzeichnet, dass**
der Verbundwerkstoff eine Matrix aus Siliziumkarbid und Kohlenstoff umfasst, die durch Flüssigsilizieren eines Kohlenstoff-Kohlenstoff-Körpers hergestellt wird, der durch Pyrolyse eines phenolharzgebundenen, kohlenstofffaserverstärkten Grünkörpers erzeugt wurde, wobei ein Volumengehalt an Kohlenstofffasern (6; 7; 8) im Reibkörper zwischen 30% und 70% beträgt und im Verbundwerkstoff dessen Phasenanteile in Massenprozent
a) SiC: 40 bis 45 %
b) Si: 2 bis 6 %
c) C und C-Fasern: 49 bis 58%
betragen.

## Claims

1. A safety device for a lift with at least one lift guide rail, which is fixedly installed in the lift shaft, and a brake part, comprising at least one friction element with at least one friction surface which can be pressed against the guide rail for braking of the lift, wherein the friction element contains, as friction material, a fibre-reinforced, ceramic composite material containing silicon carbide and, as reinforcing component, carbon fibres, **characterised in that**
- the composite material comprises a matrix of silicon carbide and carbon,
- the carbon fibres (6; 7; 8) have a minimum length of 10 mm,
- a volume content of carbon fibres (6; 7; 8) in the friction element is between 30% and 70% and
- in the composite material the phase proportions thereof in mass percent are
a) SiC: 40 to 45%
b) Si: 2 to 6%
c) C and C fibres: 49 to 58%.

2. Safety device according to claim 1, **characterised in that** the carbon fibres are arranged in the form of woven and/or knitted fabrics stacked one above the other in the manner of layers, wherein the carbon fibres (6; 7; 8) are oriented at least in the region of the friction surface (4) in such a way that they run parallel to it.

3. Safety device according to claim 1, **characterised in that** the SiC content of the matrix is higher in the area of the friction element (1) proximal to the friction surface than in its area remote from the friction surface.

4. Safety device according to claim 2, **characterised in that** the friction element (1) is divided into a core part and at least one friction part surrounding the friction surface.

5. Safety device according to claim 1, **characterised in that** the friction element (1) is built up from individual layers and these layers are connected together by reaction siliconisation, wherein preferably three layers are provided.

6. Safety device according to claim 3, **characterised in that** the SiC content of the matrix increases from the core region of the friction element (1) towards the friction surface (4).

7. Safety device according to claim 1, **characterised in that** the friction element (1) has indentations (9) in the friction surface area, particularly in the form of grooves.

8. Safety device according to claim 7, **characterised in that** the indentations (9) extend transversely to the friction direction or at an angle of 30° to 60°, preferably at an angle of 45°, to the friction direction (10).

9. Safety device according to claim 1, **characterised in that** a layer containing Si and SiC is applied to the friction surface (4), wherein this layer preferably has a thickness of 0.01 to 0.2 mm.

10. Safety device according to claim 1, **characterised in that** the composite material has a fibre volume content of at least 50% and/or an open porosity of ≤ 10%.

11. Safety device according to claim 1, **characterised in that** the carbon fibres consist of bundles of at least 1000 individual filaments, wherein the individual filaments have a diameter of 5 to 15 µm.

12. Method of producing a friction element (1) for a lift brake which can be pressed against the guide rail for a lift, wherein the friction element (1) comprises as friction material a fibre-reinforced, ceramic composite material comprising silicon carbide and, as reinforcing component, carbon, **characterised in that** the composite material comprises a matrix of silicon carbide and carbon produced by liquid siliconisation of a carbon/carbon element, which is generated by pyrolysis of a green element bound with phenolic resin and reinforced with carbon fibres, wherein a volume content of carbon fibres (6; 7; 8) in the friction element is between 30% and 70% and in the composite material the phase proportions thereof in mass percent are
a) SiC: 40 to 45%
b) Si: 2 to 6%
c) C and C fibres: 49 to 58%.

## Revendications

1. Dispositif de sécurité pour un ascenseur avec au moins un rail de guidage d'ascenseur installé de manière fixe dans la gaine d'ascenseur, et avec un élément de frein qui présente au moins un corps de friction avec au moins une surface de friction qui est apte à être pressée contre le rail de guidage pour freiner l'ascenseur, étant précisé que le corps de friction présente comme matériau de friction un matériau composite céramique renforcé par des fibres qui contient du carbure de silicium et, comme composant de renforcement, des fibres de carbone,
**caractérisé**
- **en ce que** le matériau composite comprend une matrice de carbure de silicium et de carbone,
- **en ce que** les fibres de carbone (6 ; 7 ; 8) présentent une longueur minimale de 10 mm,
- **en ce qu'**une teneur en volume de fibres de carbone (6 ; 7, 8) dans le corps de friction représente entre 30% et 70%, et
- **en ce que** dans le matériau composite, les proportions de phase, en pourcentage en masse, sont de
a) SiC : 40 à 45%
b) Si : 2 à 6%
c) C et fibres de C : 49 à 58%.

2. Dispositif de sécurité selon la revendication 1, **caractérisé en ce que** les fibres de carbone sont disposées sous la forme de tissus et/ou de tissus à mailles superposés par couches, étant précisé que les fibres de carbone (6 ; 7 ; 8), au moins dans la zone de la surface de friction (4), sont orientées de manière à être parallèles à celle-ci.

3. Dispositif de sécurité selon la revendication 1, **caractérisé en ce que** la teneur en SiC de la matrice, dans la zone du corps de friction (1) proche de la surface de friction, est plus élevée que dans la zone du corps de friction (1) éloignée de la surface de friction.

4. Dispositif de sécurité selon la revendication 1, **caractérisé en ce que** le corps de friction (1) est divisé en une partie centrale et au moins une partie de friction comprenant la surface de friction.

5. Dispositif de sécurité selon la revendication 1, **caractérisé en ce que** le corps de friction (1) se compose de couches individuelles, et ces couches sont reliées entre elles par enrichissement en silicium par réaction, étant précisé qu'il est prévu de préférence trois couches.

6. Dispositif de sécurité selon la revendication 3, **caractérisé en ce que** la teneur en SiC de la matrice va en augmentant de la zone centrale du corps de friction (1) vers la surface de friction (4).

7. Dispositif de sécurité selon la revendication 1, **caractérisé en ce que** le corps de friction (1) présente dans la zone de la surface de friction des creux (9), en particulier sous la forme de rainures.

8. Dispositif de sécurité selon la revendication 7, **caractérisé en ce que** les creux (9) s'étendent transversalement par rapport au sens de friction ou suivant un angle de 30° à 60°, de préférence suivant un angle de 45°, par rapport au sens de friction (10).

9. Dispositif de sécurité selon la revendication 1, **caractérisé en ce qu'**une couche contenant Si et SiC est appliquée sur la surface de friction (4), étant précisé que cette couche présente de préférence une épaisseur de 0,01 à 0,2 mm.

10. Dispositif de sécurité selon la revendication 1, **caractérisé en ce que** le matériau composite présente une teneur en volume de fibres d'au moins 50% et/ou une porosité ouverte ≤10%.

11. Dispositif de sécurité selon la revendication 1, **caractérisé en ce que** les fibres de carbone sont formées à partir de faisceaux d'au moins 1000 filaments individuels, étant précisé que les filaments individuels présentent un diamètre situé entre 5 et 15 µm.

12. Procédé pour fabriquer un corps de friction (1), apte à être pressé contre le rail de guidage d'un ascenseur, pour un frein d'ascenseur, étant précisé que le corps de friction (1) présente comme matériau de friction un matériau composite céramique renforcé par des fibres qui contient du carbure de silicium et, comme composant de renforcement, des fibres de carbone,
**caractérisé en ce que** le matériau composite comprend une matrice de carbure de silicium et de carbone fabriquée par enrichissement en silicium liquide d'un corps de carbone-carbone qui a été produit par pyrolyse d'un corps de base renforcé par des fibres de carbone et à liant en résine phénolique, étant précisé qu'une teneur en volume de fibres de carbone (6 ; 7 ; 8) dans le corps de friction est située entre 30% et 70% et que dans le matériau composite, les proportions de phase, en pourcentage en masse, sont de
a) SiC : 40 à 45%
b) Si : 2 à 6%
c) C et fibres de C : 49 à 58%.
